Europäisches Patentamt

European Patent Office

Office européen des brevets

(11) Publication number: **0 497 130 B1**

## EUROPEAN PATENT SPECIFICATION

(45) Date of publication of patent specification: **29.03.95** (51) Int. Cl.⁶: **C09D 9/00**, C09D 9/04

(21) Application number: **92100445.3**

(22) Date of filing: **13.01.92**

(54) **Paint strippers.**

(30) Priority: **30.01.91 US 647860**
**16.10.91 US 777865**

(43) Date of publication of application:
**05.08.92 Bulletin 92/32**

(45) Publication of the grant of the patent:
**29.03.95 Bulletin 95/13**

(84) Designated Contracting States:
**AT BE CH DE DK ES FR GB GR IT LI LU NL SE**

(56) References cited:
**DE-C- 3 438 399**
**GB-A- 1 602 187**
**US-A- 4 732 695**

(73) Proprietor: **ATOCHEM NORTH AMERICA, INC.**
**Three Parkway**
**Philadelphia,**
**Pennsylvania 19102 (US)**

(72) Inventor: **Distaso, John**
**1150 Harding**
**Orange,**
**California 92667 (US)**

(74) Representative: **Kraus, Walter, Dr.**
**Patentanwälte Kraus, Weisert & Partner**
**Thomas-Wimmer-Ring 15**
**D-80539 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

This invention relates to compositions for paint removal without the use of chlorinated solvents such as methylene chloride, especially paint stripper formulations containing a benzyl ester such as benzyl formate.

Health and environmental concerns are causing the limiting and/or obsoleting of the use of the heretofore classic thixotropic paint strippers based upon chlorinated solvents. However, solvent-based strippers employing solvents other than chlorinated materials have thus far not been wholly successful in removing today's paint/primer films (e.g., polyurethane, epoxy, and alkyd paints). Further, the preferred ester solvent of this invention (benzyl formate) would have heretofore been considered too expensive to warrant consideration as a replacement for chlorinated solvents.

A paint stripper formulation is provided (together with its use for stripping paint) containing a solvent system comprising an ester having the formula HC(O)OR, an alcohol having the formula ROH, and formic acid, where R is selected from benzyl and methylbenzyl. R is preferably benzyl. In order to make the use of the preferred benzyl formate ester economically attractive, the ester is preferably formed in situ from the corresponding (benzyl) alcohol and (formic) acid.

Depending on the intended end-use, the formulations normally also contain other conventional additives such as water, thickeners, dispersants, surfactants, and/or corrosion inhibitors.

It has now been found that the expensive benzyl formate ester is formed when the corresponding relatively inexpensive benzyl alcohol is reacted with formic acid. Further, it has been found that the reaction solution containing the formate, alcohol, and acid is a superior solvent to either the alcohol or the formate alone. Optimum results occur when the amount (by weight) of alcohol exceeds that of the ester and when the formulation contains water. Before adding water to the formulation, premixing of the other ingredients is desirable to allow the alcohol, acid, and ester to reach equilibrium conditions. In contrast to the foregoing, when acetic acid was substituted for formic acid, an ester could not be formed unless the reaction was driven with a catalyst. Further, the subject benzyl formate/benzyl alcohol/formic acid formulations were found to strip polyurethane and epoxy paint systems more than two and one-half times as fast as equivalent benzyl acetate/benzyl alcohol/acetic acid formulations.

Other suitable esters are those derived by starting with methylbenzyl alcohol instead of benzyl alcohol, including all four methylbenzyl isomers (alpha, ortho, meta, and para).

Conventional additives added to the formulations include one or more of the following: thickeners (such as hydroxypropyl methyl cellulose, hydroxyethyl cellulose or xanthan gum); dispersants (or solubilization agents) such as propylene glycol, sodium polymethacrylate (available from W.R. Grace under the tradename "Daxad 30"), or sodium xylene sulfonate; surfactants such as the amphoteric surfactants (e.g., imidazolines) or ethoxylated nonylphenol (available from G.A.F. under the tradename Igepal CO-630''); corrosion inhibitors such as 2-mercaptobenzotriazole or toluene triazole; and mineral oil (to prevent evaporation). For viscous (verticle cling-type) strippers applied by spraying or brushing, up to 75% water may be present (percent by weight, based on the weight of the total composition), while thin (emersion tank type) strippers may have up to 70% water. The water is preferably deionized.

Typical compositions would be comprised of 25 to 88 parts by weight of the solvent system, 0 to 4.0 parts thickeners, 0 to 15 parts dispersants, 0 to 9 parts surfactants, 0.2 to 4.0 parts corrosion inhibitors, 0-22 parts mineral oil, and 0-75 parts water (preferably 40-50 parts for faster stripping). Examples of useful compositions are as follows (all percents being by weight):

A. Cling-Type Stripper:

| Ingredient | % as Added | % At Equilibrium |
|---|---|---|
| benzyl alcohol | 35.0 | 25.0 |
| formic acid | 11.0 | 7.0 |
| hydroxypropyl methyl cellulose | 0.8 | 0.8 |
| propylene glycol | 3.0 | 3.0 |
| 2-mercaptobenzothiazole | 0.7 | 0.7 |
| Daxad 30 | 2.0 | 2.0 |
| deionized water | 47.5 | 49.0 |
| benzyl formate | 0.0 | 12.5 |

B. Emersion-Type Stripper:

| Ingredient | % as Added | % At Equilibrium |
|---|---|---|
| benzyl alcohol | 18.0 | 10.6 |
| benzyl formate | 0.0 | 9.3 |
| formic acid | 13.0 | 9.9 |
| water | 47.5 | 48.7 |
| sodium xylene sulfonate | 11.0 | 11.0 |
| 2-mercaptobenzothiazole | 0.5 | 0.5 |
| mineral oil | 10.0 | 10.0 |

**Claims**

1. A method of stripping paint which comprises applying to said paint a formulation containing a solvent system comprising an ester having the formula HC(O)OR, an alcohol having the formula ROH, and formic acid, where R is selected from benzyl and methylbenzyl.

2. The method of claim 1 wherein the ester is benzyl formate.

3. The method of claims 1 to 2 wherein the alcohol is benzyl alcohol.

4. The method of claims 1 to 3 wherein the ester is formed in situ from said alcohol and acid.

5. The method of claims 1 to 4 wherein the formulation contains 40 to 50 weight % water.

6. A paint stripper formulation containing a solvent system comprising an ester having the formula HC(O)-OR, an alcohol having the formula ROH, and formic acid, where R is selected from benzyl and methylbenzyl.

7. A formulation as in claim 6 wherein R is benzyl.

8. A formulation as in claims 6 and 7 wherein the ester is benzyl formate formed in situ from benzyl alcohol and formic acid.

9. A formulation as in claims 6 to 8 containing 40 to 50 weight % water.

**Patentansprüche**

1. Verfahren zum Abbeizen von Farbe, dadurch **gekennzeichnet**, daß man auf die Farbe ein Mittel aufbringt, das ein Lösungsmittelsystem enthält, das einen Ester der Formel HC(O)OR, einen Alkohol der Formel ROH und Ameisensäure umfaßt, wobei R aus Benzyl und Methylbenzyl ausgewählt ist.

2. Verfahren nach Anspruch 1, dadurch **gekennzeichnet**, daß der Ester Benzylformiat ist.

3. Verfahren nach Anspruch 1 oder 2, dadurch **gekennzeichnet**, daß der Alkohol Benzylalkohol ist.

4. Verfahren nach den Ansprüchen 1 bis 3, dadurch **gekennzeichnet**, daß der Ester in situ aus dem Alkohol und der Säure gebildet wird.

5. Verfahren nach den Ansprüchen 1 bis 4, dadurch **gekennzeichnet**, daß die Formulierung 40 bis 50 Gew.-% Wasser enthält.

6. Abbeizmittel, dadurch **gekennzeichnet**, daß es ein Lösungsmittelsystem enthält, das einen Ester der Formel HC(O)OR, einen Alkohol der Formel ROH und Ameisensäure umfaßt, wobei R aus Benzyl und Methylbenzyl ausgewählt ist.

7. Mittel nach Anspruch 6, dadurch **gekennzeichnet**, daß R Benzyl ist.

8. Mittel nach den Ansprüchen 6 und 7, dadurch **gekennzeichnet**, daß der Ester in situ aus Benzylalkohol und Ameisensäure gebildetes Benzylformiat ist.

9. Mittel nach den Ansprüchen 6 bis 8, dadurch **gekennzeichnet**, daß es 40 bis 50 Gew.-% Wasser enthält.

**Revendications**

1. Procédé de décapage pour peinture, qui comprend l'application à ladite peinture d'une formulation contenant un solvant comprenant un ester de formule HC(O)OR, un alcool de formule ROH et de l'acide formique, formules dans lesquelles R est choisi entre les groupes benzyle et méthylbenzyle.

2. Procédé suivant la revendication 1, dans lequel l'ester est le formiate de benzyle.

3. Procédé suivant les revendications 1 et 2, dans lequel l'alcool est l'alcool benzylique.

4. Procédé suivant les revendications 1 à 3, dans lequel l'ester est formé in situ à partir de l'alcool et de l'acide.

5. Procédé suivant les revendications 1 à 4, dans lequel la formulation contient 40 à 50 % en poids d'eau.

6. Formulation de décapant pour peinture contenant un solvant comprenant un ester de formule HC(O)OR, un alcool de formule ROH et de l'acide formique, formules dans lesquelles R est choisi entre les groupes benzyle et méthylbenzyle.

7. Formulation suivant la revendication 6, dans laquelle R représente un groupe benzyle.

**8.** Formulation suivant les revendications 6 et 7, dans laquelle l'ester est le formiate de benzyle formé in situ à partir d'alcool benzylique et d'acide formique.

**9.** Formulation suivant les revendications 6 à 8, contenant 40 à 50 % en poids d'eau.